# EUROPÄISCHE PATENTSCHRIFT

(11) **EP 0 943 053 B1**
(45) Veröffentlichungstag und Bekanntmachung des Hinweises auf die Patenterteilung: **31.07.2002**
(21) Anmeldenummer: 97953747.9
(22) Anmeldetag: 05.12.1997
(51) Int. Cl.: F02D 33/00, F02D 35/00, F02D 41/40

(54) **VERFAHREN ZUM STEUERN EINER DIREKTEINSPRITZENDEN BRENNKRAFTMASCHINE**
METHOD FOR CONTROLLING A DIRECT-INJECTION INTERNAL COMBUSTION ENGINE
PROCEDE POUR COMMANDER UN MOTEUR A COMBUSTION INTERNE A INJECTION DIRECTE

(30) Priorität: 05.12.1996 DE 19650518
(43) Veröffentlichungstag der Anmeldung: 22.09.1999
(73) Patentinhaber: SIEMENS AKTIENGESELLSCHAFT, 80333 München (DE); Siemens VDO Automotive S.A.S., 31036 Toulouse cedex 01 (FR)
(72) Erfinder: ACHLEITNER, Erwin, D-93083 Obertraubling (DE); CROISSANT, Karlheinz, F-31170 Tournefeuille (FR); AUBOURG, Alain-Michel-Jean, F-31240 Saint Jean (FR)
(74) Vertreter: Berg, Peter
(86) Internationale Anmeldenummer: EP9706810
(87) Internationale Veröffentlichungsnummer: WO9825015

(56) Entgegenhaltungen:
- EP-A- 0 701 050
- DE-A- 4 332 171
- US-A- 5 078 107
- Patent Abstracts of Japan, Band 9, Nr 29(M-356); & JP,A,59173534 (TOYOTA JIDOSHA K.K.), 1984-10-01

## Beschreibung

Die Erfindung betrifft ein Verfahren zum Steuern einer direkteinspritzenden, fremdgezündeten Brennkraftmaschine, die sowohl mit homogenem Gemisch als auch mit hohem Luftüberschuß unter Bildung einer Schichtladung betrieben werden kann.

Brennkraftmaschinen mit Direkteinspritzung beinhalten ein großes Potential zur Reduktion des Kraftstoffverbrauches bei geringem Schadstoffausstoß. Im Gegensatz zur Saugrohreinspritzung bei einer Otto-Brennkraftmaschine, bei der Kraftstoff in das Saugrohr eingespritzt wird, sich dort mit der angesaugten Luft vermischen kann und als ein im wesentlichen homogenes Luft/Kraftstoffgemisch in den Zylinder strömt, wird bei einer Direkteinspritzung Kraftstoff mit hohem Einspritzdruck direkt in den Verbrennungsraum eingespritzt. Der Kraftstoff muß in möglichst kleinen Tröpfchen in den Brennraum des Zylinders eingebracht werden und durch Ladungsschichtung wird das Gemisch im Bereich der Zündkerze so weit angereichert, daß eine sichere Entflammung garantiert ist, die Verbrennung im Mittel aber bei stark abgemagerten Gemisch (Luftzahlen λ>>1, abhängig vom Betriebsbereich der Brennkraftmaschine) stattfindet.

Aus der DE 43 32 171 A1 ist ein Verfahren und eine Vorrichtung zum Betrieb einer Viertaktbrennkraftmaschine mit Fremdzündung und Direkteinspritzung bekannt, bei der zur Reduzierung der Kraftstoffverbräuche und Einhaltung optimaler Abgasemissionswerte die Brennkraftmaschine in fünf verschiedenen Kennfeldbereichen nach unterschiedlichen Kriterien betrieben wird. In einem ersten Bereich wird bei völlig geöffnetem Ansaugquerschnitt unter Vermeidung einer Abgasrückführung der Kraftstoff während des Ansaugtaktes in den Brennraum eingespritzt. In einem zweiten Bereich mit ebenfalls unterbundener Abgasrückführung wird zusätzlich der Ansaugquerschnitt verändert. In einem dritten Bereich wird bei einer geregelten Zufuhr von Abgas der Ansaugquerschnitt auf einen bestimmten kleinen Wert reduziert, wobei ebenfalls in den Ansaugtakt eingespritzt wird. In einem vierten Bereich wird bei konstanter Teilöffnung und gesteuerter Abgasrückführmenge die Einspritzung mit abnehmender Last bis in den Kompressionstakt vor Zündbeginn verschoben. In einem fünftem Bereich bei teilgeöffnetem Ansaugquerschnitt und unterbundener Abgasrückführung erfolgt die Einspritzung ebenfalls in den Kompressionstakt vor Zündbeginn. Die Vorgabe der Einspritzmenge und die Steuerung der Bereiche erfolgt dabei durch die Stellung eines Gaspedals des mit der Brennkraftmaschine betriebenen Fahrzeugs.

Der Erfindung liegt die Aufgabe zugrunde, ein Verfahren zum Steuern einer fremdgezündeten, mit Direkteinspritzung arbeitenden Brennkraftmaschine der eingangs genannten Art anzugeben, das es ermöglicht, die Umschaltung zwischen den verschiedenen Verbrennungsmoden noch besser den aktuellen Betriebsbedingungen der Brennkraftmaschine anzupassen.

Diese Aufgabe wird durch die Merkmale von Patentanspruch 1 gelöst. Vorteilhafte Weiterbildungen und Ausgestaltungen sind Gegenstand der Unteransprüche.

Gemäß dem erfindungsgemäßen Verfahren wird die Brennkraftmaschine in Abhängigkeit der Kühlmitteltemperatur entweder mit homogenem Gemisch oder mit einer Schichtladung betrieben. Dadurch kann eine schnellere Aufheizung sowohl des Katalysators, als auch der Brennkraftmaschine selbst erfolgen.

Für den gesamten Betriebsbereich der Brennkraftmaschine werden zwei Kennfelder mit bezüglich der Last und der Drehzahl der Brennkraftmaschine vergleichbaren Kennfeldbereichen vorgesehen und in Abhängigkeit der Kühlmitteltemperatur entweder das eine, für eine kalte Brennkraftmaschine geltende oder das andere, für eine warme Brennkraftmaschine geltende Kennfeld zur Steuerung herangezogen.

Wird die Brennkraftmaschine im Warmlauf mit maximal möglicher Abgasrückführrate betrieben, so können die Drosselverluste und somit der Kraftstoffverbrauch vermindert und die Abgastemperatur erhöht werden.

Ein Ausführungsbeispiel der Erfindung ist in der Zeichnung dargestellt und wird in der folgenden Beschreibung näher erläutert. Es zeigen:
- Fig.1: eine schematische Darstellung einer nach dem erfindungsgemäßen Verfahren arbeitende Brennkraftmaschine und
- Fig.2: Diagramme für Betriebsbereiche der Brennkraftmaschine, abhängig von der Last und der Drehzahl bei unterschiedlichen Temperaturen der Brennkraftmaschine

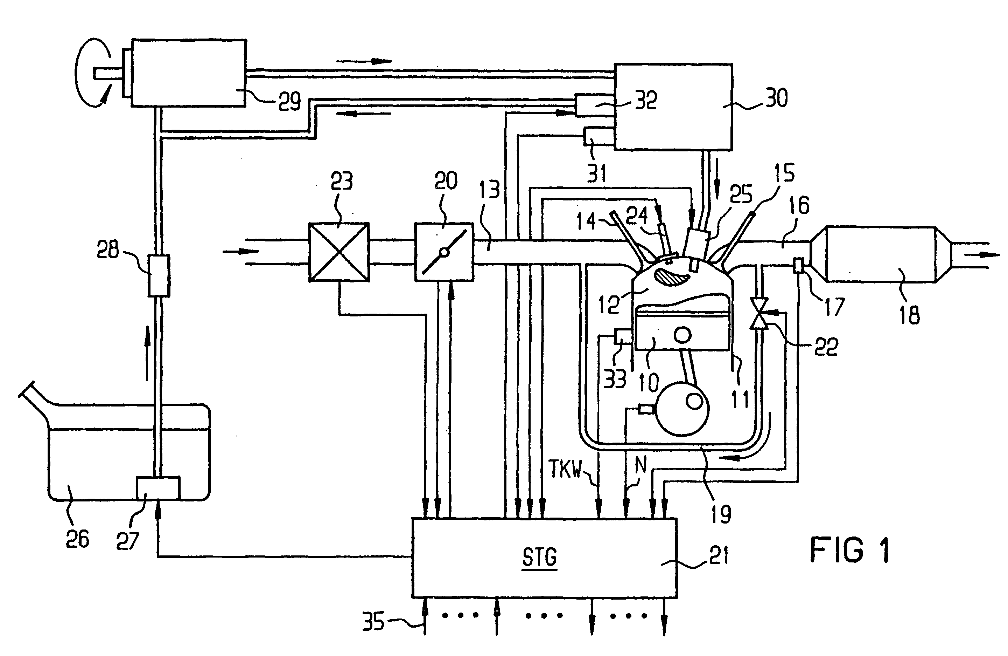

Die Figur 1 zeigt in grob schematischer Darstellung eine Brennkraftmaschine mit Hochdruck-Speichereinspritzung (Common Rail), die abhängig von Betriebsparametern sowohl mit homogenem Gemisch als auch mit geschichteter Ladung betreibbar ist und eine Vorrichtung zur Abgasrückführung aufweist. Aus Gründen der Übersichtlichkeit sind dabei nur diejenigen Teile gezeichnet, die für das Verständnis der Erfindung notwendig sind. Insbesondere ist nur ein Zylinder einer mehrzylindrigen Brennkraftmaschine dargestellt.

Mit dem Bezugszeichen 10 ist ein Kolben bezeichnet, der in einem Zylinder 11 einen Verbrennungsraum 12 begrenzt. In den Verbrennungsraum 12 mündet ein Ansaugkanal 13, durch den gesteuert durch ein Einlaßventil 14 die Verbrennungsluft in den Zylinder 11 strömt. Gesteuert durch ein Auslaßventil 15 zweigt vom Verbrennungsraum 12 ein Abgaskanal 16 ab, in dessen weiterer Verlauf ein Sauerstoffsensor in Form einer breitbandigen (linearen) Lambdasonde 17 und ein NOx-Speicherkatalysator 18 angeordnet ist. Der NOx-Speicherkatalysator dient dazu, um in Betriebsbereichen mit magerer Verbrennung die geforderten Abgasgrenzwerte einhalten zu können. Er adsorbiert aufgrund seiner Beschichtung die bei magerer Verbrennung erzeugten NOx-Verbindungen im Abgas.

Um die speziell bei Brennkraftmaschinen mit Direkteinspritzung und Schichtladebetrieb auftretenden NOx-Emissionen der Brennkraftmaschine zu verringern, ist eine Abgasrückführung vorgesehen. Durch Zumischen von bereits verbranntem Abgas zur angesaugten Frischluft wird die Verbrennungs-Spitzentemperatur gesenkt, wodurch die temperaturabhängige Stickoxid-Emission reduziert wird. Dieser Mechanismus gilt auch für homogenes Gemisch der Brennkraftmaschine. Zum Rückführen eines definierten Teilstromes des Abgases zweigt deshalb vom Abgaskanal 16 in Strömungsrichtung des Abgases gesehen vor dem Katalysator 18 eine Abgasrückführleitung 19 ab, die stromabwärts einer Drosselklappe 20 in den Ansaugkanal 13 mündet. Die Menge des rückgeführten Abgases wird durch ein mittels von Signalen einer elektronischen Steuerungseinrichtung (STG) 21 ansteuerbares Ventil 22, in der Regel als Abgasrückführventil bezeichnet, eingestellt. Alternativ hierzu kann das Abgasrückführventil auch pneumatisch z.B. mit Hilfe einer Druckdose gesteuert sein.

Die zur Verbennung im Zylinder 11 notwendige Frischluft strömt über ein nichtdargestelltes Luftfilter und einen Luftmassenmesser 23 in den Ansaugtrakt 13 zu der Drosselklappe 20. Bei dieser Drosselklappe 20 handelt es sich um ein elektromotorisch angesteuertes Drosselorgan (E-Gas), dessen Öffnungsquerschnitt neben der Betätigung durch den Fahrer (Fahrerwunsch) abhängig vom Betriebsbereich der Brennkraftmaschine über Signale der elektronischen Steuerungseinrichtung 21 einstellbar ist. Damit lassen sich beispielsweise störende Lastwechselreaktionen des Fahrzeugs beim Gasgeben und - wegnehmen genauso reduzieren wie Drehmomentsprünge beim Übergang vom Betrieb mit homogenem Gemisch zum Betrieb mit geschichteter Ladung und ungedrosseltem Luftweg. Zugleich wird zur Überwachung und Überprüfung ein Signal für die Stellung der Drosselklappe an die Steuerungseinrichtung 21 abgegeben.

In den Verbrennungsraum 12 ragt eine Zündkerze 24 und ein Einspritzventil 25, durch das entgegen den Kompressionsdruck im Verbrennungsraum 12 Kraftstoff eingespritzt werden kann. Die Förderung und Bereitstellung des Kraftstoffes für dieses Einspritzventil 25 erfolgt durch ein bekanntes Common-Rail-System für Benzin-Direkteinspritzung. Der Kraftstoff wird dabei aus einem Kraftstoffvorratsbehälter 26 mittels einer, in der Regel im Behälter angeordneten, einen Vorfilter aufweisenden Elektrokraftstoffpumpe 27 unter geringem Druck (typisch 1 bar) gefördert und anschließend über einen Kraftstoffilter 28 zu einer Kraftstoffhochdruckpumpe 29 geleitet. Diese Kraftstoffhochdruckpumpe 29 wird entweder mechanisch durch eine Kopplung mit der Kurbelwelle der Brennkraftmaschine oder elektrisch angetrieben. Sie erhöht den Kraftstoffdruck auf einen Wert von typisch 100 bar in einem Hochdruckspeicher 30 (common rail), an dem die Zuführleitungen aller Einspritzventile angeschlossen sind und der somit die Einspritzventile mit Kraftstoff versorgt. Der Druck im Hochdruckspeicher 30 wird durch einen Drucksensor 31 von der Steuerungseinrichtung 21 erfasst. Abhängig von diesem Drucksignal wird der Druck im Speicher 30 entweder auf einen konstanten oder einen variablen Wert mittels eines Druckreglers 32 eingestellt. Überflüssiger Kraftstoff wird nicht in den Kraftstoffvorratsbehälter 26 zurückgeführt, sondern an die Eingangsleitung der Hochdruckpumpe 29.

Ein Temperatursensor 33 erfasst ein der Temperatur der Brennkraftmaschine entsprechendes Signal, beispielsweise über eine Messung der Kühlmitteltemperatur TKW. Die Drehzahl N der Brennkraftmaschine wird mit Hilfe eines Markierungen der Kurbelwelle oder eines mit ihr verbundenen Geberrades abtastenden Sensors 34 erfasst. Beide Signale werden der Steuerungseinrichtung 21 zur weiteren Verarbeitung, insbesondere zur Steuerung der Brennkraftmaschine hinsichtlich der zu wählenden Steuerstrategie -homogenes Gemisch oder geschichtetes Gemisch- zugeführt.

Weitere Steuerparameter, die zum Betrieb der Brennkraftmaschine benötigt werden, wie beispielsweise Gaspedalstellung, Temperatur der Ansaugluft, Drosselklappenstellung, Signale von Klopfsensoren, Batteriespannung, Fahrdynamik-Anforderungen usw. sind ebenfalls der Steuerungseinrichtung 21 zugeführt und sind allgemein in der Figur mit dem Bezugszeichen 35 gekennzeichnet. Über die bereits erwähnten Parameter wird in der Steuerungseinrichtung 21 durch Abarbeiten abgelegter Steuerungsroutinen u.a. der Lastzustand der Brennkraftmaschine erkannt. Auch werden die Parameter derart aufbereitet und weiterverarbeitet, daß bei bestimmten Betriebszuständen der Brennkraftmaschine u.a. eine Umschaltung vom Betrieb mit homogenem Gemisch auf Betrieb mit Schichtladung und umgekehrt durchgeführt und/oder eine Rückführung von Abgas eingeleitet werden kann.

Die Umschaltung zwischen homogenen Betrieb und geschichteten Betrieb und umgekehrt erfolgt zum einen durch Beeinflußung des Öffnungsquerschnittes (Drosselung) des Ansaugkanals mittels einer elektrischen Drosselklappe und zum anderen durch Verändern des Einspritzzeitpunktes. Zum Erzeugen eines homogenen Gemisches im Verbrennungsraum erfolgt bei gedrosseltem Betrieb die Einspritzung früh in den Ansaugtakt, während zum Erzeugen eines geschichteten Gemisches entweder bei teils gedrosseltem Betrieb oder vollständig ungedrosseltem Betrieb die Einspritzung spät in den Kompressionstakt erfolgt.

Da die Katalysatortemperatur einen wesentlichen Einfluß auf die Abgasemissionen hat, stellt sie einen wichtigen Parameter für die Steuerung der Brennkraftmaschine und die Wahl des Verbrennungsmodus dar. Einerseits muß sichergestellt sein, daß er nach einem Kaltstart der Brennkraftmaschine möglichst schnell seine Betriebstemperatur erreicht und andererseits muß während des normalen Betriebes der Brennkraftmaschine die Abgastemperatur auf einen ausreichenden Wert gehalten werden, um den Katalysator in seinem optimalen Betriebsbereich zu betreiben.

Direkteinspritzende Brennkraftmaschinen, die mit extrem abgemagerten und geschichteten Gemischen betrieben werden, weisen sehr niedrige Werte für die Abgastemperaturen auf, die insbesondere in Betriebsbereichen mit niedrigen Lasten unter die Anspringtemperatur des Katalysators fallen können. Eine Möglichkeit zur Erhöhung der Abgastemperatur ist die Abgasrückführung. Bei Schichtladungsbetrieb der Brennkraftmaschine dient die Abgasrückführung auch zur Senkung des NOx-Ausstoßes.

Eine wirkungsvolle Maßnahme, um die Katalysatortemperatur zu erhöhen, ist die Drosselung der Brennkraftmaschine auch im geschichteten Betrieb. Dadurch kann die Zeit, während der der Katalysator aufgrund zu niedriger Temperatur nicht arbeitet, verkürzt werden. Diese Strategie führt allerdings zu einer gewissen Beeinträchtigung der Kraftstoff-Verbrauchsvorteile.

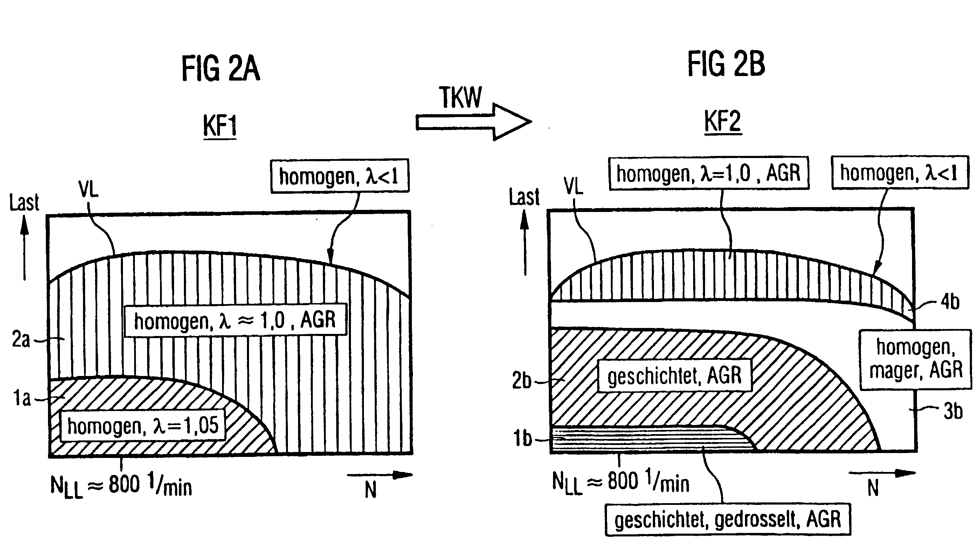

Die Verteilung der verschiedenen Betriebsweisen der Brennkraftmaschine (homogen, geschichtet, mit und ohne Abgasrückführung) innerhalb eines über der Last und der Drehzahl aufgespannten Betriebsbereiches der Brennkraftmaschine zeigt die Figur 2.

Dabei sind zwei unterschiedliche Kennfelder KF1, KF2 in Form von Diagrammen dargestellt, wobei das Kennfeld nach Figur 2A für eine kalte Brennkraftmaschine, das Kennfeld nach Figur 2B für eine heiße Brennkraftmaschine gilt. In beiden Kennfeldern ist auf der Abszisse die Drehzahl N und auf der Ordinate eine Lastgröße aufgetragen. Als Lastgröße kann beispielsweise das Drehmoment der Brennkraftmaschine, der Mitteldruck oder die mit Hilfe des Luftmassenmessers im Ansaugkanal ermittelte Luftmasse herangezogen werden. Beide Kennfelder sind in übereinanderliegende Bereiche unterteilt.

Die Temperatur der Brennkraftmaschine wird durch Auswerten des Signals des Temperatursensors 33 erfasst und mit einem ersten Schwellenwert verglichen. Liegt die Temperatur TKW der Brennkraftmaschine unterhalb dieses Schwellenwertes oder ist die Zeitdauer nach dem Start kleiner als ein vorgegebener Wert, so wird auf eine kalte Brennkraftmaschine erkannt und der Steuermodus für die Brennkraftmaschine wird anhand des in Figur 2A dargestellten Kennfeldes in Abhängigkeit der momentanen Last und der Drehzahl ausgewählt.

Nach einem Kaltstart und im anschließenden Warmlaufbetrieb der Brennkraftmaschine, wenn also die Temperatur TKW noch unterhalb des Schwellenwertes liegt, wird bei niedriger Last bzw. im unteren Teilastbereich und geringer Drehzahl N die Brennkraftmaschine mit einem leicht mageren, homogenen Gemisch betrieben. Typische Luftzahlen hierfür liegen im Bereich λ =1,05 - 1,10. Dieser Kennfeldbereich ist in der Figur mit 1a bezeichnet. Ein typischer Wert für eine Leerlaufdrehzahl ist auf der Abszisse mit N_{LL} = 800 1/min eingezeichnet.

Durch diese leichte Abmagerung des homogenen Gemisches in Verbindung mit einer Verstellung der Zündung in Richtung spät sinkt zwar der Wirkungsgrad der Brennkraftmaschine, hat aber den Vorteil, daß der Katalysator schneller seine Anspringtemperatur erreicht und somit in der Lage ist, schädliche Abgaskomponenten schneller in ungefährliche Verbindungen umzuwandeln.

Liegt die Temperatur der Brennkraftmaschine nach dieser Steuermaßnahme immer noch unter dem Schwellenwert, hat sich aber inzwischen die Last erhöht, so wird die Brennkraftmaschine weiter mit etwas leicht magerem Gemisch und aktiver Abgasrückführung betrieben (Kennfeldbereich 2a). Der Kennfeldbereich 2a ist in Richtung höherer Last durch die Vollastlinie 3a begrenzt. Um bei Vollastbetrieb der Brennkraftmaschine ein maximales Drehmoment zu erhalten, wird die Brennkraftmaschine mit homogenem, fettem Gemisch λ <1 ohne Abgasrückführung betrieben.

Der Übergang vom Kennfeld nach Figur 2A zum Kennfeld nach Figur 2B erfolgt entweder abhängig von der Temperatur der Brennkraftmaschine oder einer davon abgeleiteten Größe, insbesonders der Kühlmitteltemperatur TKW. Dies kann beispielsweise durch Vergleich der aktuellen Temperatur mit dem bereits erwähnten Schwellenwert geschehen, oder es wird überprüft, ob sich die Temperatur seit dem Start der Brennkraftmaschine um einen vorgegenen Wert erhöht hat.

Alternativ dazu kann der Übergang zwischen den beiden Kennfeldern auch zeitlich festgelegt sein. Ergibt eine Abfrage, daß seit dem Start der Brennkraftmaschine eine vorgegebene Zeitspanne abgelaufen ist, so wird auf eine heiße Brennkraftmaschine geschlossen und die Steuerung der Brennkraftmaschine erfolgt nach einem Modus, wie er im Kennfeld nach Figur 2b festgelegt ist. Die Umschaltwerte (Temperatur, Zeitspanne) werden dabei experimentell auf dem Prüfstand für jeden Brennkraftmaschinentyp und verwendeten Katalysator ermittelt und in einem Speicher der elektronischen Steuerungseinrichtung abgelegt.

Gemäß dem Kennfeld nach Figur 2b wird bei warmer bzw. heißer Brennkraftmaschine bei niedrigen Lasten und unterem bis mittleren Drehzahlbereich im gedrosselten Betrieb mit Schichtladung und aktiver Abgasrückführung AGR betrieben (Kennfeldbereich 1b). Im Teillastbereich von niedrigen bis zu hohen Drehzahlwerten wird die Brennkraftmaschine mit Schichtladung und aktiver Abgasrückführung betrieben (Kennfeldbereich 2b). Dies kann entweder teilgedrosselt oder ungedrosselt erfolgen.

Oberhalb des Kennfeldbereiches 2b liegt der Kennfeldbereich 3b. Dieser umfasst den oberen Teillastbereich bei niedrigen bis hin zu mittleren Drehzahlen und den Bereich niedriger Last bis obere Teillast bei sehr hohen Drehzahlen. In diesem Kennfeldbereich wir die Brennkraftmaschine mit homogenem, magerem Gemisch und aktiver Abgasrückführung betrieben.

Bei noch höheren Lasten bis hin zur Vollastlinie VL wird die Brennkraftmaschine unabhängig von der Drehzahl mit homogenem, stöchiometrischem Gemisch λ = 1 und aktiver Abgasrückführung betrieben (Kennfeldbereich 4b).

Bei Vollast VL der Brennkraftmaschine wird keine Abgasrückführung zugelassen und ein fettes, homogenes Gemisch eingestellt.

## Patentansprüche

1. Verfahren zum Steuern einer direkteinspritzenden, fremdgezündeten Brennkraftmaschine, die
- wahlweise mit homogenem Gemisch oder mit Luftüberschuß unter Bildung einer Schichtladung im Zylinder gedrosselt oder ungedrosselt betrieben wird,
- in bestimmten Betriebsbereichen der Brennkraftmaschine ein Teil des Abgases mit Hilfe einer Abgasrückführung der Verbrennungsluft beigemischt wird,
- der Einspritzbeginn für den Kraftstoff derart gesteuert wird, daß
-- zur Erzeugung eines homgenenen Gemisches im Zylinder Kraftstoff in den Ansaugtakt zwischen dem oberen Totpunkt und dem unteren Totpunkt des Kolbens des jeweiligen Zylinders eingespritzt wird,
-- zur Erzeugung einer geschichteten Ladung im Zylinder Kraftstoff in den Zylinder kurz vor dem oberen Totpunkt vor der Zündung in den Kompressionstakt eingespritzt wird und
- der Betriebsbereich der Brennkraftmaschine abhängig von der Last und der Drehzahl in verschiedene Kennfeldbereiche eingeteilt ist und diese Kennfeldbereiche festlegen, ob die Brennkraftmaschine mit homogenem Gemisch oder mit einer Schichtladung betrieben wird,
**dadurch gekennzeichnet, daß**
bei der Umschaltung vom Betrieb mit homogenem Gemisch auf Betrieb mit Schichtladung und umgekehrt die Kühlmitteltemperatur (TKW) der Brennkraftmaschine berücksichtigt wird.

2. Verfahren nach Anspruch 1, **dadurch gekennzeichnet, daß** für den gesamten Betriebsbereich der Brennkraftmaschine zwei Kennfelder (KF1, KF2) mit bezüglich der Last und der Drehzahl der Brennkraftmaschine vergleichbaren Kennfeldbereichen (1a,1b; 2a,2b,3b) vorgesehen sind und in Abhängigkeit der Kühlmitteltemperatur (TKW) der Brennkraftmaschine das eine oder andere Kennfeld (KF1,KF2) zur Steuerung der Brennkraftmaschine herangezogen wird.

3. Verfahren nach Anspruch 1, **dadurch gekennzeichnet, daß** das erste Kennfeld (KF1) Kennfeldbereiche (1a, 2a) enthält, die zur Steuerung der Brennkraftmaschine nach deren Start und bei kalter Brennkraftmaschine verwendet werden und das zweite Kennfeld (KF2) Kennfeldbereiche (1b,2b,3b,4b) enthält, die zur Steuerung der warmen bzw. heißen Brennkraftmaschine verwendet werden.

4. Verfahren nach Anspruch 2 oder 3, **dadurch gekennzeichnet, daß** die Umschaltung von dem ersten Kennfeld (KF1) auf das zweite Kennfeld (KF2) erfolgt, wenn die Kühlmitteltemperatur (TKW) einen vorgegebenen Schwellenwert überschreitet.

5. Verfahren nach Anspruch 2 oder 3, **dadurch gekennzeichnet, daß** die Umschaltung von dem ersten Kennfeld (KF1) auf das zweite Kennfeld (KF2) erfolgt, wenn eine vorgegebene Zeitspanne abgelaufen ist.

6. Verfahren nach Anspruch 4 und 5, **dadurch gekennzeichnet, daß** die Umschaltwerte experimentell auf dem Prüfstand für jeden Brennkraftmaschinentyp und verwendeten Katalysator ermittelt werden und in einem Speicher einer der Brennkraftmaschine zugeordneten Steuerungseinrichtung (21) abgelegt sind.

7. Verfahren nach Anspruch 1, **dadurch gekennzeichnet, daß** bei kalter Brennkraftmaschine und niedriger Last, geringer Drehzahl diese mit einem leicht mageren, homogenen Gemisch betrieben wird.

8. Verfahren nach Anspruch 1, **dadurch gekennzeichnet, daß** bei kalter Brennkraftmaschine und hoher Last bis hin zur Vollast diese mit leicht magerem, homogenem Gemisch und aktiver Abgasrückführung betrieben wird.

9. Verfahren nach Anspruch 1, **dadurch gekennzeichnet, daß** die Brennkraftmaschine im Warmlauf mit einer maximalen Abgasrückführrate betrieben wird.

10. Verfahren nach Anspruch 1, **dadurch gekennzeichnet, daß** die warme bzw. heiße Brennkraftmaschine bei niedrigen Lasten und unterem bis mittleren Drehzahlbereich im gedrosselten Betrieb mit Schichtladung und aktiver Abgasrückführrate betrieben wird.

11. Verfahren nach Anspruch 1, **dadurch gekennzeichnet, daß** während dere Regenierungsphase des Speicherkatalysators (18) die Brennkraftmaschine mit fettem, homogenen Gemisch betrieben wird.

12. Verfahren nach Anspruch 1, **dadurch gekennzeichnet, daß** bei niedrigen Außentemperaturen der Betrieb der Brennkraftmaschine mit homogenem Gemisch verlängert wird, um die Erwärmung des Innenraumes eines von der Brennkraftmaschine angetriebenen Fahrzeuges zu beschleunigen.

## Claims

1. Method for controlling a direct-injection, applied-ignition internal combustion engine
- which is optionally operated in a throttled or non-throttled state with a homogeneous mixture or with excess air, with formation of a layer charge in the cylinder,
- which has certain operating ranges in which part of the exhaust gas is admixed by means of exhaust gas recirculation of the combustion air,
- which controls the start of fuel injection such that
- in order to generate a homogeneous mixture in the cylinder, fuel is injected into the intake stroke between the top dead centre and bottom dead centre of the piston of the respective cylinder,
- in order to generate a layered charge in the cylinder, fuel is injected into the cylinder shortly before the top dead centre before ignition into the compression stroke and
- whose operating range is divided into different ignition map areas dependent on the load and the speed, these ignition map areas determining whether the internal combustion engine is operated with a homogeneous mixture or with a layer charge,
**characterised in that** when changing over from operation using a homogenous mixture to operation using a layer charge and vice verse the coolant temperature (TKW) of the internal combustion engine is taken into account.

2. Method according to Claim 1, **characterised in that** for the entire operating range of the internal combustion engine two ignition maps (KF1, KF2) are provided, containing ignition map areas (1a, 1b; 2a, 2b, 3b) comparable in terms of the load and the speed of the internal combustion engine, and **in that** depending on the coolant temperature (TKW) of the internal combustion engine one or other of the ignition maps (KF1, KF2) is deployed to control the internal combustion engine.

3. Method according to Claim 1, **characterised in that** the first ignition map (KF1) contains ignition map areas (1a, 2a) which are used to control the internal combustion engine after start-up thereof and when the internal combustion engine is in the cold state, and **in that** the second ignition map (KF2) contains ignition map areas (1b 2b, 3b, 4b) which are used to control the warm or hot internal combustion engine.

4. Method according to Claims 2 or 3, **characterised in that** the change-over from the first ignition map (KF1) to the second ignition map (KF2) takes place if the coolant temperature (TKW) exceeds a predefined threshold value.

5. Method according to Claims 2 or 3, **characterised in that** the change-over from the first ignition map (KF1) to the second ignition map (KF2) takes place if a predefined period of time has elapsed.

6. Method according to Claims 4 and 5, **characterised in that** the change-over values are determined experimentally on the test bench for each internal combustion engine model and each catalytic converter used and are stored in a memory of a control device (21) assigned to the internal combustion engine.

7. Method according to Claim 1, **characterised in that** when the internal combustion engine is in the cold state, at low load and at low speed it is operated with a slightly lean, homogeneous mixture.

8. Method according to Claim 1, **characterised in that** when the internal combustion engine is in the cold state and at high to full load it is operated with a slightly lean, homogeneous mixture and active exhaust gas recirculation.

9. Method according to Claim 1, **characterised in that** when the internal combustion engine is warming up it is operated at a maximum exhaust gas recirculation rate.

10. Method according to Claim 1, **characterised in that** the warm or hot internal combustion engine is operated at low loads and in the low to medium speed range in throttled operation with layer charging and an active exhaust gas recirculation rate.

11. Method according to Claim 1, **characterised in that** during the regeneration phase of the storage catalytic converter (18) the internal combustion engine is operated with a rich, homogeneous mixture.

12. Method according to Claim 1, **characterised in that** at low external temperatures the operation of the internal combustion engine is extended with a homogeneous mixture in order more quickly to warm the interior of a vehicle driven by the internal combustion engine.

## Revendications

1. Procédé pour commander un moteur à combustion interne à injection directe à allumage commandé qu'on fait travailler
- sélectivement avec un mélange homogène ou avec un excédent d'air avec formation d'une charge stratifiée dans le cylindre, avec étranglement ou sans étranglement,
- dans certaines zones du fonctionnement du moteur à combustion interne, on ajoute à l'air comburant une partie des gaz d'échappement à l'aide d'un recyclage des gaz d'échappement,
- le début d'injection pour le carburant est commandé de telle manière que
-- pour produire un mélange homogène dans le cylindre, le carburant est injecté dans le temps d'aspiration entre le point mort haut et le point mort bas du piston du cylindre considéré
-- pour produire une charge stratifiée dans le cylindre, le carburant est injecté dans le cylindre juste avant le point mort haut avant l'allumage, dans le temps de compression et
- la zone de fonctionnement du moteur à combustion interne est subdivisée en différentes zones de la table caractéristique, en fonction de la charge et de la vitesse de rotation, et ces zones de la table caractéristique déterminent si on fait fonctionner le moteur à combustion interne avec mélange homogène ou avec charge stratifiée,
**caractérisé en ce que** lorsqu'on bascule du fonctionnement avec mélange homogène au fonctionnement avec charge stratifiée et inversement, on tient compte de la température du fluide de refroidissement (TKW) du moteur à combustion interne.

2. Procédé selon la revendication 1, **caractérisé en ce que**, pour l'ensemble de la zone de fonctionnement du moteur à combustion interne, il est prévu deux tables caractéristiques (KF1, KF2) comprenant des zones de tables caractéristiques (la, 1b 2a, 2b, 3b) comparables sous l'aspect de la charge et de la vitesse de rotation du moteur à combustion interne et, en fonction de la température du fluide de refroidissement (TKW) du moteur à combustion interne, on fait intervenir l'une ou de l'autre table caractéristique (KF1, KF2) pour la commande du moteur à combustion interne.

3. Procédé selon la revendication 1, **caractérisé en ce que** la première table caractéristique (KF1) contient des zones de table caractéristique (la, 2a) qui sont utilisées pour la commande du moteur à combustion interne après son démarrage et alors que le moteur à combustion interne est froid, et la deuxième table caractéristique (KF2) contient des zones de table caractéristique (1b 2b, 3b, 4b) qui sont utilisées pour la commande du moteur à combustion interne chaud ou très chaud.

4. Procédé selon la revendication 2 ou 3, **caractérisé en ce que** le basculement de la première table caractéristique (KF1) à la deuxième table caractéristique (KF2) se produit lorsque la température du fluide de refroidissement (TKW) devient supérieure à une valeur de seuil choisie.

5. Procédé selon la revendication 2 ou 3, **caractérisé en ce que** la basculement de la première table caractéristique (KF1) à la deuxième table caractéristique (KF2) se produit lorsqu'un laps de temps choisi s'est écoulé.

6. Procédé selon la revendication 4 ou 5, **caractérisé en ce que** les valeurs de basculement sont obtenues expérimentalement sur un banc d'essai pour chaque type de moteur à combustion interne et pour chaque catalyseur utilisé, et sont enregistrées dans une mémoire d'un dispositif de commande (21) associé au moteur à combustion interne.

7. Procédé selon la revendication 1, **caractérisé en ce que**, dans le cas d'un moteur à combustion interne froid, d'une basse charge et d'une faible vitesse de rotation, on fait travailler ce moteur à combustion interne avec un mélange légèrement pauvre, homogène et avec le recyclage des gaz d'échappement en action.

8. Procédé selon la revendication 1, **caractérisé en ce que** dans le cas d'un moteur à combustion interne froid et à charge élevée jusqu'à la pleine charge, on fait travailler ce moteur à combustion interne avec un mélange légèrement pauvre et homogène et avec le recyclage des gaz d'échappement en action.

9. Procédé selon la revendication 1, **caractérisé en ce qu'**on fait travailler le moteur à combustion interne en marche à chaud avec un débit maximal de recyclage des gaz d'échappement.

10. Procédé selon la revendication 1, **caractérisé en ce qu'**on fait travailler le moteur à combustion interne chaud ou très chaud à basse charge et avec un intervalle de vitesse de rotation inférieur à moyen en fonctionnement étranglé avec charge stratifiée et débit de recyclage des gaz d'échappement en action.

11. Procédé selon la revendication 1, **caractérisé en ce que**, pendant la phase de régénération du catalyseur accumulateur (18), on fait travailler le moteur à combustion interne avec un mélange riche, homogène.

12. Procédé selon la revendication 1, **caractérisé en ce que**, à de basses températures extérieures, le travail du moteur à combustion interne avec mélange homogène est prolongé pour accélérer le chauffage du volume intérieur d'un véhicule entraîné par le moteur à combustion interne.
